# EUROPEAN PATENT APPLICATION

(11) **EP 4 664 917 A1**
(43) Date of publication of application: **17.12.2025**
(21) Application number: 25182783.8
(22) Date of filing: 13.06.2025
(51) Int. Cl.: H04Q 11/00

(54) **METHOD, DEVICE, APPARATUS AND MEDIUM FOR PASSIVE OPTICAL NETWORK ACTIVATION**

(30) Priority: 14.06.2024 CN 202410775666
(71) Applicant: Nokia Solutions and Networks Oy, 02610 Espoo (FI)
(72) Inventor: GENG, Dan, Shanghai (CN); LU, Hai Jun, Shanghai (CN); SILLIS, Yannick, 2390 Malle (BE); VAN DER PUTTEN, Frank, 2811 Leest (BE); VAN HOOF, Werner, 2630 Aartselaar (BE)
(74) Representative: DREISS Patentanwälte PartG mbB

(57) **Abstract**

Example embodiments of the disclosure relate to a method, a device, an apparatus, and medium for passive optical network activation. According to example embodiments of the present disclosure, a first apparatus transmits first information to a second apparatus. The first information indicates a first random delay value generated at the first apparatus and a first serial number of the first apparatus. The first apparatus also receives second information from the second apparatus. The second information indicates an identity assigned by the second apparatus and one or more of a second random delay value or a second serial number. In this way, the serial number may be prevented from being stolen by malicious device, and meanwhile, it may be ensured that the first apparatus may accurately recognize the identity assigned to the first apparatus by the second apparatus.

## Description

### FIELD

Example embodiments of the present disclosure relate to the field of communication technologies, and more particularly, to a method, a device, an apparatus, and a computer-readable medium for passive optical network activation.

### BACKGROUND

With the rapid development of modern communication technologies, the construction and optimization of network infrastructure become important factors for promoting the development of information society. Optical fiber communication is widely used and popularized as a high-bandwidth and low-loss transmission medium. In many optical fiber communication technologies, the passive optical network (PON) has become a main choice for broadband access networks such as fiber to the home (FTTH) due to its efficient and economical features. The architecture design of the passive optical network aims to reduce the number of active devices in the network, which reduces the construction and maintenance cost by assigning signals to a plurality of users through an optical assign network. With continuous progress of technologies, new passive optical network technologies and activation approaches are proposed, and these technologies not only improve network performance and stability, but also provide more possibilities for future network development. Therefore, researching and optimizing the activation process of the passive optical network has important significance for improving the overall network performance.

### SUMMARY

In a first aspect of the present disclosure, a first apparatus for passive optical network activation is provided. The first apparatus comprises: at least one processor; and at least one memory storing instructions that, when executed by the at least one processor, cause the first apparatus at least to: transmit, to a second apparatus, first information indicating a first random delay value generated at the first apparatus and a first serial number of the first apparatus; and receive, from the second apparatus, second information indicating an identity assigned by the second apparatus and one or more of: a second random delay value or a second serial number.

In a second aspect of the present disclosure, a second apparatus for passive optical network activation is provided. The second apparatus comprises: at least one processor; and at least one memory storing instructions that, when executed by the at least one processor, cause the second apparatus at least to: receive, from a first apparatus, first information indicating a first random delay value generated at the first apparatus and a first serial number of the first apparatus; and transmit, to the first apparatus, second information indicating an identity assigned by the second apparatus and one or more of: a second random delay value or a second serial number.

In a third aspect of the present disclosure, a communication system is provided. The communication system, comprising: a first apparatus according to the first aspect of the present disclosure, or a second apparatus according to the second aspect.

In a fourth aspect of the present disclosure, a communication method is provided. The communication method comprises: transmitting first information by a first apparatus and to a second apparatus. The first information indicates a first random delay value generated at the first apparatus and a first serial number of the first apparatus. The method further comprises: receiving second information by the first apparatus and from the second apparatus. The second information indicates an identity assigned by the second apparatus and one or more of: a second random delay value or a second serial number.

In a fifth aspect of the present disclosure, a communication method is provided. The communication method comprises: receiving first information by a second apparatus and from a first apparatus. The first information indicates a first random delay value generated at the first apparatus and a first serial number of the first apparatus. The method further comprises: transmitting second information by the second apparatus and to the first apparatus. The second information indicates an identity assigned by the second apparatus and one or more of: a second random delay value or a second serial number.

In a sixth aspect of the present disclosure, an apparatus for communication is provided. The apparatus comprises: means for transmitting, to a second apparatus, first information indicating a first random delay value generated at the first apparatus and a first serial number of the first apparatus; and means for receiving, from the second apparatus, second information indicating an identity assigned by the second apparatus and one or more of: a second random delay value or a second serial number.

In a seventh aspect of the present disclosure, an apparatus for communication is provided. The apparatus comprises: means for receiving, from a first apparatus, first information indicating a first random delay value generated at the first apparatus and a first serial number of the first apparatus; and means for transmitting, to the first apparatus, second information indicating an identity assigned by the second apparatus and one or more of: a second random delay value or a second serial number.

In an eighth aspect of the present disclosure, a computer-readable medium is provided. The computer-readable medium has instructions stored thereon, when executed by at least one processing unit, cause the at least one processing unit to be configured to perform the method of the fourth aspect or the fifth aspect.

It should be understood that content described in the summary section is not intended to limit key or important features of embodiments of the present disclosure, nor to limit the scope of the present disclosure. Other features of the present disclosure will be readily understood from the following description.

### BRIEF DESCRIPTION OF DRAWINGS

Example embodiments of the present disclosure are presented by way of example, and their advantages are explained in more detail below with reference to the accompanying drawings, where
FIG. 1 is a schematic diagram of an environment in which example embodiments described in the present disclosure may be implemented;
FIG. 2 is a signaling diagram for passive optical network activation according to some example embodiments of the present disclosure;
FIG. 3 is a flowchart of a method for passive optical network activation according to some example embodiments of the present disclosure;
FIG. 4 is a flowchart of a method for passive optical network activation according to some example embodiments of the present disclosure;
FIG. 5 is a simplified block diagram of a device suitable for implementing example embodiments of the present disclosure; and
FIG. 6 is a schematic diagram of a computer-readable medium according to some example embodiments of the present disclosure.

In all the accompanying drawings, the same or similar reference numerals denote the same or similar elements.

### DETAILED DESCRIPTION

The principles and spirit of the present disclosure will be described below with reference to several example embodiments shown in the accompanying drawings. It should be understood that these specific example embodiments are described only to enable those skilled in the art to better understand and implement the present disclosure, rather than limiting the scope of the present disclosure in any way.

As used herein, the term "comprising" and similar terms should be understood to be open containing, that is, "including but not limited to." The term "based on" should be understood to be "at least partly based on". The terms "one embodiment" or "the embodiment" should be understood as "at least one embodiment". The terms "first," "second," and the like may refer to different or identical objects. Other explicit and implicit definitions may also be included below.

As used herein, the term "determining" includes a wide variety of actions. For example, "determining" may include calculating, computing, processing, deriving, investigating, looking up (e.g., looking up in a table, database, or a further data structure), ascertaining, etc. Further, "determining" may include receiving (e.g., receiving information), accessing (e.g., accessing data in memory), etc. Further, "determining" may include parsing, selecting, picking, establishing, etc.

Unless explicitly stated, performing a step "in response to A" herein may not mean that the step is performed immediately after "A", but may include one or more intermediate steps.

As used herein, the term "circuit apparatus"/"circuit" refers to one or more of: (a) only an implementation of hardware circuit (such as an implementation of only analog circuit and/or digital circuit); and (b) a combination of hardware circuit and software, such as (if applicable): (i) a combination of analog circuit and/or digital hardware circuit and software/firmware, and (ii) any part of a hardware processor and software (including digital signal processors, software, and memory that work together to cause an apparatus to perform various functions, such as an optical communication apparatus or other computing device); and (c) a hardware circuit and/or processor, such as a microprocessor or a part of a microprocessor, that requires software (e.g., firmware) for operation, but may not have software when not required for operation.

The definition of circuit apparatus/ circuit is applicable to all usage scenarios of this term in this application (including in any claims). As a further example, the term "circuit apparatus" / "circuit" used herein also covers implementations of only hardware circuit or processor (or multiple processors), or a part of hardware circuit or processors, or accompanying software or firmware thereof. For example, if applicable to a particular claim element, the term "circuit apparatus" also covers a baseband integrated circuit or a processor integrated circuit or similar integrated circuit in an OLT or other computing device.

As used herein, the term "passive optical network (PON)" refers to an optical fiber communication network architecture in which optical signals are assigned from an optical line terminal (OLT) to a plurality of optical network units (ONUs) by a passive optical distribution network (ODN) without using any active electronic device or power supply during transmission. The passive optical network assigns optical signals by using an optical splitter, so that multiple users share one optical fiber link, thereby achieving efficient and economical broadband access.

As used herein, the term "optical network unit (ONU)" refers to a device located at a user end in the passive optical network (PON) architecture. The optical network unit is responsible for converting an optical signal transmitted by the optical fiber into an electrical signal for use by the user-end device. The optical network unit (ONU) is one of the key devices for users to access the optical fiber network. Optical network units are typically connected to the optical line terminal (OLT) and communicate over the optical distribution network (ODN). It should be understood that the optical network unit is not limited to home user access, and may also be used in various application scenarios such as an enterprise and a campus. Considering the rapid development of the communication field, future types of communication apparatus may also be used to implement the present disclosure certainly. It should not be considered to limit the scope of the present disclosure to only the foregoing apparatus.

As used herein, the term "optical line terminal (OLT)" refers to a device located at a service provider end in the passive optical network (PON) architecture. The optical line terminal is responsible for managing and controlling the entire PON network, including communication with the optical network unit (ONU). The optical line terminal converts an electrical signal from the core network into an optical signal, which is transmitted to a plurality of ONU through the optical distribution network (ODN), and is also responsible for converting the optical signal sent by the ONU back into an electrical signal, which is transmitted to the core network. It should be understood that the optical line terminal is not only used for signal conversion, but also undertakes multiple functions such as network management, bandwidth assignment, and fault detection. Considering the rapid development of the communication field, future types of communication apparatus may also be used to implement the present disclosure certainly. It should not be considered to limit the scope of the present disclosure to only the foregoing apparatus.

As used herein, the term "physical layer operations, administration and maintenance (PLOAM)" refers to a set of protocols and functions for physical layer operations, administration and maintenance in the passive optical network (PON) system. The PLOAM information is transmitted between the OLT and the ONU, and is responsible for managing various operations of the PON network, including bandwidth assignment, fault detection, performance monitoring, status reporting, and the like. Through the PLOAM channel, the OLT may send various management and control commands to the ONU, and the ONU may also report its status and performance information to the OLT by this channel. It should be understood that PLOAM is not limited to basic management and maintenance functions, and may further include some extended functions to meet requirements of different network environments.

As used herein, the term "serial number grant" refers to a type of control information that the optical line terminal (OLT) periodically sends to the optical network unit (ONU) in the passive optical network (PON) system. The serial number grant message indicates the ONU to send its unique serial number for the OLT to recognize and register the ONU. This process helps establish and manage identity and communication of ONUs in the network.

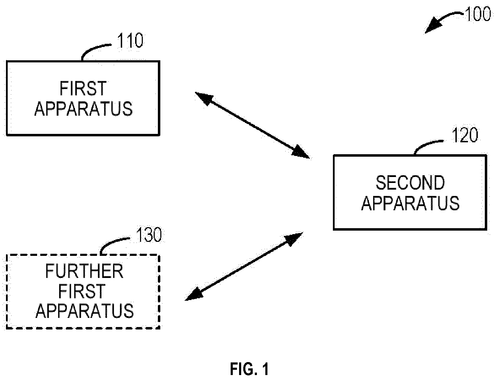

FIG. 1 is a schematic diagram of an example communication environment 100 in which example embodiments described in the present disclosure may be implemented. The communication environment 100 may be part of a communication network. The communication environment 100 includes the second apparatus 120 and the first apparatus 110. In some example embodiments, the communication environment 100 may further include an optional further first apparatus, for example, a further first apparatus 130. The communication environment 100 may include any number of first apparatus. In embodiments of the present disclosure, the first apparatus 110 and the further first apparatus 130 are interchangeable, that is, the methods/steps implemented at the first apparatus 110 described in embodiments may also be implemented at the further first apparatus 130. It should be understood that the communication environment 100 is merely an example and is not intended to limit the present disclosure in any way. In some example embodiments, the first apparatus may include the optical network unit (ONU) and the second apparatus may include the optical line terminal (OLT).

It should be understood that the communication environment 100 is described for example purposes only and does not imply any limitation on the scope of the present disclosure. For example, example embodiments of the present disclosure may also be applied to systems different from the communication environment 100. The number of elements or entities shown is merely an example rather than a limitation. Moreover, elements or entities may communicate with each other using any communication technology currently known and to be developed in the future. As an example, in the passive optical network, the OLT is responsible for managing and controlling the entire passive optical network and assigning signals to multiple ONUs through the optical distribution network (ODN). Each ONU is responsible for converting the received optical signal into an electrical signal for use by the user terminal device. At this point, the communication environment 100 may include more than one ONU. A single OLT may be associated with one or more ONUs.

It should be understood that the number of apparatus and their connections shown in FIG. 1 is merely an example instead of limiting. The communication environment 100 may include any suitable number of apparatus configured to implement example embodiments of the present disclosure. Although not shown, it should be understood that one or more other apparatuses may be deployed in the communication environment 100.

In some example embodiments, the first apparatus 110 may include the optical network unit (ONU) and the second apparatus 120 may include the optical line terminal (OLT). In the following, for illustrative purposes, some example embodiments are described by taking the first apparatus 110 as the optical network unit (ONU) and the second apparatus 120 as the optical line terminal (OLT) as an example. However, in some example embodiments, the operations described in conjunction with the first apparatus or the ONU may also be implemented at the second apparatus or the OLT. Similarly, the operations described in conjunction with the second apparatus or the OLT may also be implemented at the first apparatus or the ONU.

Communications in the communication environment 100 may be implemented according to any suitable communication protocol(s). Examples of communication protocols include, but are not limited to, cellular communication protocols, such as the first generation (1G), the second generation (2G), 2.5G, 2.75G, the third generation (3G), the fourth generation (4G), 4.5G, the fifth generation (5G), the sixth generation (6G), etc., wireless local area network communication protocols such as the institute of electrical and electronics engineers (IEEE) 802.1, etc., and/or any other protocol currently known or to be developed in the future.

Further, communications may utilize any suitable wireless communication technology, including but not limited to code division multiple access (CDMA), frequency division multiple access (FDMA), time division multiple access (TDMA), frequency division duplex (FDD), time division duplex (TDD), multiple-input multiple-output (MIMO), orthogonal frequency division multiplexing (OFDM), discrete Fourier transform-based spread orthogonal frequency division multiplexing (DFT-s-OFDM), and/or any other technology currently known or to be developed in the future.

In conventional approaches, security threats may be caused because the ONU allows the serial number of the ONU to be rewritten through the user interface. An example of the security threats is that the part of the ONU activation process is sending the serial number of the ONU from the OLT to the ONU in plain text during ONU identity assignment. Thus, a malicious user connected to the same PON may sniff all serial numbers on the PON and perform directed theft or denial of service attacks by copying the sniffed serial numbers into their ONU devices. In addition to the above-mentioned situation where a malicious ONU exists, there is a further situation where two or more ONUs with the same serial number exist, which is a manufacturing reason. Both cases have not been addressed in current standard.

The OLT periodically issues the serial number grant. In response to the serial number grant, the OLT receives the serial numbers of one or more of the ONUs that want to go through the registration process. For the OLT, one solution may be to let two ONUs proceed to the O5 state with the same serial number but different ONU identities. The operation state O5 is a specific status in the PON, indicating that the ONU has successfully registered and may communicate normally. After entering the O5 state, the ONU may perform data transmission and reception.

To distinguish legitimate ONU and malicious ONU, a secure mutual authentication (SMA) method may be used. The SMA method may identify a legitimate ONU through authentication (for which the authentication will succeed) and invalidate a malicious ONU (for which the authentication will fail). However, there is currently no approach to let multiple ONUs proceed to O5 with the same serial number, therefore, the PON is very vulnerable to these attacks. Currently defined authentication mechanisms are insufficient because if the ONU may not reach O5, these ONUs cannot even commence. Through the method of the present disclosure, in some example embodiments, only a part of the serial number of the ONU will be transmitted from the OLT to the ONU during the process of the OLT assigning the ONU identity message. In other example embodiments, during the process of the OLT assigning the ONU identity message, the OLT will not transmit the serial number of the ONU to the ONU, but transmit only the generated random delay or a part of the random delay. Therefore, malicious user may be effectively prevented from obtaining the entire serial number of the ONU, thereby greatly optimizing the activation process of the passive optical network.

The principles and example embodiments of the present disclosure will be described in detail below with further reference to the accompanying drawings.

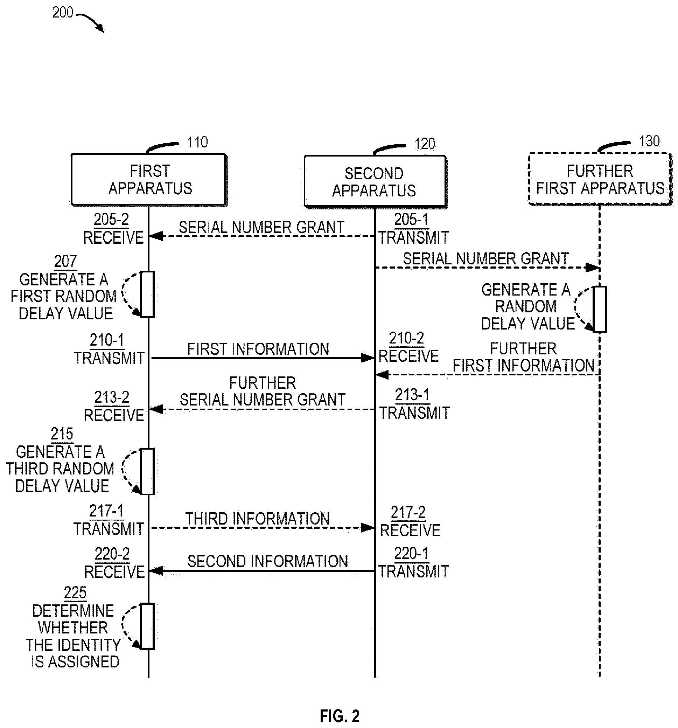

FIG. 2 is a signaling diagram for the passive optical network activation 200 according to some example embodiments of the present disclosure. For discussion purposes, the signaling diagram for the passive optical network activation 200 will be described with reference to FIG. 1. It should be understood that although only a single first apparatus 110 is shown in FIG. 2, a plurality of first apparatus 110 may also be involved in the signaling diagram 200.

As shown in FIG. 2, in some example embodiments, the second apparatus 120 may transmit (205-1) a serial number grant to the first apparatus 110. After the first apparatus 110 receives (205-2) the serial number grant from the second apparatus 120, the first apparatus may generate (207) a first random delay value based on reception of the serial number grant.

The first apparatus 110 transmits (210-1) first information to the second apparatus 120. The first information indicates a first random delay value generated (207) at the first apparatus 110 and a serial number of the first apparatus. In some example embodiments, the first information may be transmitted in physical layer operations, administration and maintenance (PLOAM) message.

In the present disclosure, the serial number message (i.e., the first information) of the first apparatus 110 (ONU) in the above example embodiment is shown in Table 1 below:

**Table 1**

| Octet | Content | Description |
|---|---|---|
| 1-2 | ONU Identity | 0x03FF, without assigning an ONU identity; or if one ONU has multiple PON interfaces, activation is performed on the second PON interface and the subsequent PON interface, and an ONU identity is previously assigned to a pilot PON interface that has been activated first. |
| 3 | Message Type Identity | 0x01, "Serial_Number_ONU". |
| 4 | Serial Number | All instances for the Serial_Number_ONU PLOAM message are set to 0x00. |
| 5-8 | Vendor Identity | See clause 11.2.6.1. |
| 9-12 | VSSN | See clause 11.2.6.2. |
| 13-16 | Random Delay | The random delay used by the ONU when sending this message, which is represented in time amount. |

It should be understood that the content in Table 1 is merely an example and is not intended to limit the scope of the present disclosure.

In some example embodiments, after the second apparatus 120 receives (210-2) the first information, if the first random delay value generated (207) by the first apparatus 110 is same as a random delay value generated by a further first apparatus 130, the second apparatus 120 may transmit (213-1) a further serial number grant to the first apparatus 110. After the first apparatus 110 receives (213-2) the further serial number grant, the first apparatus 110 may generate (215) a third random delay value. Next, the first apparatus 110 may transmit (217-1) third information to the second apparatus 120. That is, the second apparatus 120 may receive (217-2) the third information from the first apparatus 110. The third information indicates the serial number of the first apparatus and a third random delay value generated based on receiving (213-2) the further serial number grant. Only as an example, the first random delay value generated (207) by the first apparatus 110 is 0x1A2B, and the random delay value generated by the further first apparatus 130 is also 0x1A2B, that is, the first random delay value is same as the random delay value generated by the further first apparatus 130. In this case, the second apparatus 120 may transmit (213-1) the further serial number grant, and the first apparatus 110 may generate (215) the random delay value again, referred to as a third random delay value, based on reception of the further serial number grant, and then the first apparatus 110 transmits (217-1) the third information including the third random delay value to the second apparatus 120.

In some example embodiments, after the second apparatus 120 receives (210-2) the first information, if a part of the first random delay value generated (207) by the first apparatus is same as a part of the random delay value generated by the further first apparatus 130, the second apparatus 120 may transmit (213-1) a further serial number grant to the first apparatus 110. After the first apparatus 110 receives (213-2) the further serial number grant, the first apparatus 110 may generate (215) the third random delay value. Next, the first apparatus 110 may transmit (217-1) the third information to the second apparatus 120. That is, the second apparatus 120 may receive (217-2) the third information from the first apparatus 110. The third information indicates the serial number of the first apparatus and the third random delay value generated based on receiving (213-2) the further serial number grant. Only as an example, if the first two bits of the first random delay value generated (207) by the first apparatus 110 are 1A, and the first two bits of the random delay value generated by the further first apparatus 130 are also 1A, the second apparatus 120 may transmit (213-1) the further serial number grant. The first apparatus 110 may generate (215) the random delay value again, referred to as the third random delay value, based on reception of the further serial number grant. The first apparatus 110 then transmits (217-1) the third information including the third random delay value to the second apparatus 120.

In some other example embodiments, after the second apparatus 120 receives (210-2) the first information, if the first random delay value generated (207) by the first apparatus is same as the random delay value generated by the further first apparatus 130, and a part of the serial number of the first apparatus is same as a part of the serial number of the further first apparatus, the second apparatus 120 may transmit (213-1) a further serial number grant to the first apparatus 110. After the first apparatus 110 receives (213-2) the further serial number grant, the first apparatus 110 may generate (215) the third random delay value. Next, the first apparatus 110 may transmit (217-1) the third information to the second apparatus 120. That is, the second apparatus 120 may receive (217-2) the third information from the first apparatus 110. The third information indicates the serial number of the first apparatus and the third random delay value generated based on receiving (213-2) the further serial number grant. For example, the first five bits of the serial number of the first apparatus 110 are ABCDE, the first random delay value generated (207) by the first apparatus 110 is 0x1A2B, and the first five bits of the serial number of the further first apparatus 130 are also ABCDE, the random delay value generated by the further first apparatus 130 is also 0x1A2B. In this case, the second apparatus 120 may transmit (213-1) the further serial number grant. The first apparatus 110 may generate (215) the random delay value again, referred to as the third random delay value. The first apparatus 110 then transmits (217-1) the third information including the third random delay value to the second apparatus 120.

In some other example embodiments, after the second apparatus 120 receives (210-2) the first information, if a part of the first random delay value generated (207) by the first apparatus is same as a part of the random delay value generated by the further first apparatus 130, and a part of the serial number of the first apparatus is same as a part of the serial number of the further first apparatus, the second apparatus 120 may transmit (213-1) a further serial number grant to the first apparatus 110. After the first apparatus 110 receives (213-2) the further serial number grant, the first apparatus 110 may generate (215) the third random delay value. Next, the first apparatus 110 may transmit (217-1) the third information to the second apparatus 120. That is, the second apparatus 120 may receive (217-2) the third information from the first apparatus 110. The third information indicates the serial number of the first apparatus and the third random delay value generated based on receiving (213-2) the further serial number grant. For example, the first five bits of the serial number of the first apparatus 110 are ABCDE, the first two bits of the first random delay value generated (207) by the first apparatus 110 are 1A, and the first five bits of the serial number of the further first apparatus 130 are ABCDE, the first two bits of the random delay value generated by the further first apparatus 130 are 1A. In this case, the second apparatus 120 may transmit (213-1) the further serial number grant. The first apparatus 110 may generate (215) the random delay value again, referred to as the third random delay value. The first apparatus 110 then transmits (217-1) the third information including the third random delay value to the second apparatus 120.

The second apparatus 120 transmits (220-1) second information to the first apparatus 110. In other words, the first apparatus 110 receives (120) the second information from the second apparatus 120. The second information indicates the identity assigned by the second apparatus 120 and at least one of a second random delay value or a second serial number. In some example embodiments, the second random delay value is same as the received (210-2) first random delay value. In some other example embodiments, the second random delay value is extracted from the received (210-2) first random delay value. In some example embodiments, the second apparatus 120 extracts a part from the first serial number as the second serial number. In some example embodiments, the field indicating the second serial number in the second information may only include bits used to indicate the second serial number. In some other example embodiments, the field indicating the second serial number in the second information may include bits used to indicate the second serial number and padding bits. For example, the second apparatus 120 may extract a part from the first serial number as the second serial number, and may fill the remaining part to predefined values. The predefined values may all be 0, all be 1, or may be predefined pseudo values. In some example embodiments, the padding bits may be located before the bits used to indicate the second serial number. Alternatively, the padding bits may be located after the bits used to indicate the second serial number. As an example, if the complete serial number includes 32 bits, the second apparatus 120 extracts 8 bits from the first serial number as the second serial number and fills the remaining 24 bits as predefined values (0 or 1). In this case, the field indicating the second serial number in the second information includes 32 bits, where 8 bits are used to indicate the second serial number and the remaining 24 bits are predefined values (for example, 24 bits are all 0 or all 1). In some example embodiments, if the identity included in the second information is assigned to the first apparatus 110, the second serial number indicated in the second information is a part of the first serial number of the first apparatus 110. In other words, the second serial number indicated in the second information is extracted from the first serial number of the first apparatus 110. In this way, the serial number may be prevented from being stolen by malicious devices.

In some example embodiments, the second information may not indicate the second serial number. For example, the second information may not include a field used to indicate the second serial number. In some other embodiments, the field indicating the second serial number may be set to null. In some example embodiments, the second serial number is a predefined value. The second serial number being the predefined value may also be referred to that the second information does not indicate the second serial number. In some example embodiments, the field used to indicate the second serial number may be set to all 0 or all 1 or a pseudo serial number. For example, the second apparatus 120 may set Vendor_ID and VSSN fields (i.e., fields for indicating the second serial number) in the second information to 0x00. In this way, the malicious device may be prevented from detecting the serial number of the first apparatus.

In some example embodiments, the second random delay value may be a complete random delay value. For example, the second apparatus 120 may copy the random delay value in the first information into the second information. In some other embodiments, the second random delay value may be a part extracted from the complete random delay value. For example, if the complete random delay value includes M bits, the second random value may include M bits, or may include N bits (N is less than M) truncated from the M-bit delay value. In some example embodiments, the second apparatus 120 assigns the identity to the first apparatus 110 based on the received (210-2) first random delay value and the serial number of the first apparatus 110.

The first apparatus 110 may determine whether the identity is assigned to the first apparatus 110 based on whether the condition is satisfied. For example, the first apparatus 110 may determine whether the condition is satisfied based on the first random delay value, the first serial number, the second random delay value, and the second serial number. In some example embodiments, the second serial number is a part extracted from the complete serial number. For example, if the full serial number includes P bits, the second serial number may include Q bits selected from the P-bit serial number (e.g., the first Q bits of the P bits). In some other example embodiments, the second serial number may be a predefined value, for example, all 0, or all 1, or a predefined pseudo serial number. The first apparatus 110 and the second apparatus 120 may pre-agree on the predefined pseudo serial number. Alternatively, the second serial number may not present in the second information. For example, the second information may not include a field used to indicate the second serial number.

The first apparatus 110 and the second apparatus 120 may determine the part of the serial number based on a same rule. The second serial number is compared with the part of the first serial number, where the part of the second serial number extracted from the complete serial number is located at a same location in the complete serial number as the part of the first serial number located in the first serial number. For example, the extracted part of the second serial number is the first three bits of one serial number and is compared with the first three bits of the first serial number. As a further example, the extracted part of the second serial number is the last three bits of one serial number and is compared with the last three bits of the first serial number.

In some embodiments, the first apparatus 110 and the second apparatus 120 may determine the part of the random delay value based on a same rule. For example, if the second apparatus 120 selects the first N bits of the complete random delay value as the second random delay value, the first apparatus 110 compares the second random delay value with the first N bits of the first random delay value to determine whether to be the same.

For example, in some example embodiments, if both the second random delay value and the second serial number are present in the second information, the second serial number is same as a part of the first serial number of the first apparatus 110, and the second random delay value is same as the random delay value generated by the first apparatus 110, the condition is satisfied, and the first apparatus 110 determines (225) that the identity is assigned to the first apparatus 110. If the condition is not satisfied, the first apparatus 110 determines (225) that the identity is not assigned to the first apparatus 110. For example, if the extracted part of the second serial number is the first five bits of a complete serial number, which is ABCDE, and the first five bits of the first serial number are also ABCDE, and both the second random delay value and the first random delay value are 0x1A2B, the condition is satisfied, and the first apparatus 110 determines (225) that the identity is assigned to the first apparatus 110. As another example, if the second serial number is the last four bits of one serial number, which is EF01, and the last four bits of the first serial number are also EF01, and both of the second random delay value and the first random delay value are 0x1A2B, the condition is satisfied, and the first apparatus 110 determines (225) that the identity is assigned to the first apparatus 110.

In some example embodiments, if both the second random delay value and the second serial number are present in the second information, the second serial number is same as a part of the first serial number of the first apparatus 110, and the second random delay value is same as a part of the random delay value generated by the first apparatus 110, the condition is satisfied, and the first apparatus 110 determines (225) that the identity is assigned to the first apparatus 110. If the condition is not satisfied, the first apparatus 110 determines (225) that the identity is not assigned to the first apparatus 110. For example, if a part extracted from the second serial number is the first five bits of one serial number, which is ABCDE, and the first five bits of the first serial number are also ABCDE, as well as the second random delay value is 1A, and the first two bits of the first random delay value are also 1A, the condition is satisfied, and the first apparatus 110 determines (225) that the identity is assigned to the first apparatus 110. As another example, if a part extracted from the second serial number is the last four bits of one serial number, which is EF01, and the last four bits of the first serial number are also EF01, as well as the second random delay value is 1A, and the first two bits of the first random delay value are also 1A, the condition is satisfied, and the first apparatus 110 determines (225) that the identity is assigned to the first apparatus 110.

In some other example embodiments, if the second random delay value presents in the second information, but the second serial number is a predefined value, and the second random delay value is same as the random delay value generated by the first apparatus 110, the condition is satisfied, and it is determined (225) that the identity is assigned to the first apparatus 110. If the condition is not satisfied, it is determined (225) that the identity is not assigned to the first apparatus 110. For example, if the second serial number is 0x00 or all 1, or the second serial number is a predefined pseudo serial number, and both the second random delay value and the first random delay value are 0x1A2B, the condition is satisfied, and the first apparatus 110 determines (225) that the identity is assigned to the first apparatus 110.

In some other example embodiments, if a second random delay value presents in the second information but a second serial number does not present, and the second random delay value is same as the random delay value generated by the first apparatus 110, the condition is satisfied, and it is determined (225) that the identity is assigned to the first apparatus 110. If the condition is not satisfied, it is determined (225) that the identity is not assigned to the first apparatus 110. For example, if both the second random delay value and the first random delay value are 0x1A2B, the condition is satisfied, and the first apparatus 110 determines (225) that the identity is assigned to the first apparatus 110.

In some other example embodiments, if a second random delay value presents in the second information, but the second serial number is a predefined value, and the second random delay value is same as a part of the random delay value generated by the first apparatus 110, the condition is satisfied, and it is determined (225) that the identity is assigned to the first apparatus 110. If the condition is not satisfied, it is determined (225) that the identity is not assigned to the first apparatus 110. For example, if the second serial number is 0x00 or all 1, or the second serial number is a predefined pseudo serial number, the second random delay value is the first two bits of the complete random delay value, which is 1A, and the first two bits of the first random delay value are also 1A, the condition is satisfied, and the first apparatus 110 determines (225) that the identity is assigned to the first apparatus 110.

In some other example embodiments, if a second random delay value presents in the second information but the second serial number does not present, and the second random delay value is same as a part of the random delay value generated by the first apparatus 110, the condition is satisfied, and it is determined (225) that the identity is assigned to the first apparatus 110. If the condition is not satisfied, it is determined (225) that the identity is not assigned to the first apparatus 110. For example, if the second random delay value is the first two bits of the complete random delay value, which is 1A, and the first two bits of the first random delay value are also 1A, the condition is satisfied, and the first apparatus 110 determines (225) that the identity is assigned to the first apparatus 110.

In the present disclosure, the second message, i.e., the PLOAM message assigning the identity of the first apparatus (ONU), in the above example embodiment is updated, as shown in Table 2 below:

**Table 2**

| Octet | Content | Description | |
|---|---|---|---|
| 1-2 | ONU Identity | 0x03FF, an ONU identity. | |
| 3 | Message Type Identity | 0x03, "Assign_ONU-ID or Collision_Feedback". | |
| 4 | Serial Number | 8-bit broadcast PLOAM serial number. | |
| 5-6 | ONU Identity | ONU identity being assigned, or ONU identity of successful ONU | |
| | | Least significant bit justified 10-bit assigned ONU identity value padded with six most significant bits with zeros; range from 0 to 1019 (0x0000 to 0x03 fb). | |
| | | If the transmission is not successful (no ONU identity is assigned and no ONU has communicated its PLOAM message), this field is set to 0xFFFF and ignored by the received ONU. | |
| 7-10 | Vendor Identity | If 0x00 is not used (ONU identity is set to 0xFFFF), see clause 11.2.6.1. | |
| 11-14 | VSSN | If 0x00 is not used (ONU identity is set to 0xFFFF), see clause 11.2.6.2. | |
| | | Only one byte of the serial number is sent, such as the first byte of the serial number. | |
| 15 | Upstream nominal line rate indicator | 0000 00 UU, where: U- upstream nominal line rate | |
| | | UU = 00, upstream nominal line rate p₀ Φ₀ ; | |
| | | UU = 01, upstream nominal line rate p₀ Φ₁ ; | |
| | | UU = 10, upstream nominal line rate p₀ Φ₂ . | |
| | | This indicator is only applicable to an ONU supporting multiple upstream line rates to select the indicated upstream nominal line rate to operate. | |
| 16-17 | Allocation Identity | The allocation identity value is the reception of a contention-based allocation to which feedback is being provided. 14 bits, aligned with the least significant bit. The transmitter sets the most significant bit to 0, which is treated as "don't care" the receiver. | |
| 18 | Allocation Feedback | C000FFDD, | |
| | | C-Continuation flag | |
| | | | 0 - Last message of the allocation feedback |
| | | | 1 - Another message to follow |
| | | FF - Major level feedback | |
| | | | 00 - Not evaluated |
| | | | 01 - Idle allocation |
| | | | 10 - Successful ONU Identity assignment |
| | | | 11. Collision |
| | | DD - Detailed feedback of other events of the allocation interval | |
| | | | 00 -Not evaluated |
| | | | 01 - Idle |
| | | | 10 - Well-formed |
| | | | 11 - Collision |
| 19-22 | Random Delay | The same random delay value as reported in the serial number PLOAM message. | |
| 23-40 | Padding | Set to 0x00 by the transmitter and treated as "don't care" by the receiver. | |
| 41-48 | Message integrity check | Message integrity check, calculated using the default PLOAM integrity key. | |

It should be understood that the Table 2 is merely an example rather than intended to limit the scope of the present disclosure.

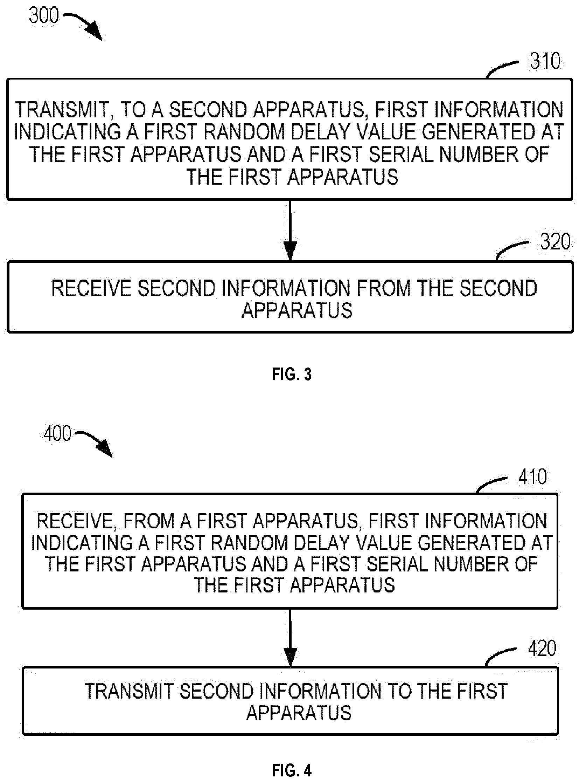

FIG. 3 shows a flowchart of a method 300 for passive optical network activation according to some example embodiments of the present disclosure. For example, the method 300 may be implemented in the communication environment 100, such as implemented at the first apparatus 110.

At block 310, the first apparatus 110 transmits first information to the second apparatus 120. The first information indicates a first random delay value generated at the first apparatus 110 and a first serial number of the first apparatus 110.

At block 320, the first apparatus 110 receives second information from the second apparatus 120. The second information indicates an identity assigned by the second apparatus 120 and one or more of: a second random delay value or a second serial number.

In some example embodiments, the first apparatus 110 causes the first apparatus 110 to determine whether a condition is satisfied based on the first random delay value, the first serial number, the second random delay value, and the second serial number. The identity is determined to be assigned to the first apparatus based on a determination that the condition is satisfied; or the identity is determined not to be assigned to the first apparatus based on a determination that the condition is not satisfied.

In some example embodiments, the condition includes one of: in response to both the second random delay value and the second serial number being present in the second information, the second serial number being same as a part of the first serial number, and the second random delay value being same as the first random delay value; in response to both the second random delay value and the second serial number being present in the second information, the second serial number being same as a part of the first serial number, and the second random delay value being same as a part of the first random delay value; in response to both the second random delay value and the second serial number being present in the second information and the second serial number being a predefined value, the second random delay value being same as the first random delay value; in response to the second random delay value being present in the second information but the second serial number being absent in the second information, the second random delay value being same as the first random delay value; in response to both the second random delay value and the second serial number being present in the second information and the second serial number being a predefined value, the second random delay value being same as the part of the first random delay value; or in response to the second random delay value being present in the second information but the second serial number being absent in the second information, the second random delay value being same as the part of the first random delay value.

In some example embodiments, the first apparatus 110 causes the first apparatus 110 to receive, from the second apparatus, a serial number grant; generate the first random delay value based on a reception of the serial number grant; and transmit, to the second apparatus, the first information indicating the first serial number and the first random delay value.

In some example embodiments, the first apparatus 110 causes the first apparatus 110 to receive, from the second apparatus, a further serial number grant; generate a third random delay value based on a reception of the further serial number grant; and transmit, to the second apparatus, third information indicating the first serial number and the third random delay value.

In some example embodiments, the first information is transmitted in physical layer operations, administration, and maintenance (PLOAM) message.

In some example embodiments, the first apparatus 110 includes the optical network unit (ONU) and the second apparatus 120 includes the optical line terminal (OLT).

FIG. 4 is a flowchart of a method 400 for passive optical network activation according to some example embodiments of the present disclosure. For example, the method 400 may be implemented in the communication environment 100, such as implemented at the second apparatus 120.

At block 410, the second apparatus 120 receives first information from the first apparatus 110. The first information indicates a first random delay value generated at the first apparatus and a first serial number of the first apparatus.

At block 420, the second apparatus 120 transmits second information to the first apparatus 110. The second information indicates an identity assigned by the second apparatus and one or more of: a second random delay value or a second serial number.

In some example embodiments, the second apparatus 120 causes the second apparatus 120 to assign an identity to the first apparatus based on the first random delay value and the first serial number.

In some example embodiments, the second random delay value is same as the first random delay value or the second random delay value is extracted from the first random delay value.

In some example embodiments, the second apparatus 120 causes the second apparatus 120 to transmit, to the first apparatus, a serial number grant; and receive, from the first apparatus, the first information indicating the first serial number and the first random delay value.

In some example embodiments, the second apparatus 120 causes the second apparatus 120 to transmit, to the first apparatus, a further serial number grant based on a determination that the first random delay value is same as a random delay value of a further first apparatus; and receive, from the first apparatus, third information indicating the first serial number and a third random delay value generated based on the further serial number grant.

In some example embodiments, the second apparatus 120 causes the second apparatus 120 to transmit, to the first apparatus, a further serial number grant based on a determination that a part of the first random delay value is same as a part of a random delay value of a further first apparatus; and receive, from the first apparatus, third information indicating the first serial number and a third random delay value generated based on the further serial number grant.

In some example embodiments, the second apparatus 120 causes the second apparatus 120 to transmit, to the first apparatus, a further serial number grant based on a determination that the first random delay value is same as a random delay value of a further first apparatus and that a part of the first serial number of the first apparatus is same as a part of a serial number of the further first apparatus,; and receive, from the first apparatus, third information indicating the first serial number and a third random delay value generated based on the further serial number grant.

In some example embodiments, the second apparatus 120 causes the second apparatus 120 to transmit, to the first apparatus, a further serial number grant based on a determination that a part of the first random delay value is same as a part of a random delay value of a further first apparatus and a part of the first serial number of the first apparatus is same as a part of a serial number of the further first apparatus; and receive, from the first apparatus, third information indicating the first serial number and a third random delay value generated based on the further serial number grant.

In some example embodiments, the first information is received in physical layer operations, administration and maintenance (PLOAM) message.

In some example embodiments, the first apparatus 110 includes the optical network unit (ONU) and the second apparatus 120 includes the optical line terminal (OLT).

In some example embodiments, an apparatus for a passive optical network (e.g., first apparatus 110 or the further first apparatus 130) may include means for performing corresponding steps of the method 300. These means may be implemented in any suitable manner. For example, the means may be implemented as circuit apparatus or software modules.

In some example embodiments, the first apparatus may include means for transmitting, to a second apparatus, first information indicating a first random delay value generated at the first apparatus and a first serial number of the first apparatus; and means for receiving, from the second apparatus, second information indicating an identity assigned by the second apparatus and one or more of: a second random delay value or a second serial number.

In some example embodiments, the first apparatus further includes: means for determining whether a condition is satisfied based on the first random delay value, the first serial number, the second random delay value, and the second serial number; means for determining that the identity is assigned to the first apparatus based on a determination that the condition is satisfied; or means for determining that the identity is not assigned to the first apparatus based on a determination that the condition is not satisfied.

In some example embodiments, the condition includes one of: in response to both the second random delay value and the second serial number being present in the second information, the second serial number being same as a part of the first serial number, and the second random delay value being same as the first random delay value; in response to both the second random delay value and the second serial number being present in the second information, the second serial number being same as a part of the first serial number, and the second random delay value being same as a part of the first random delay value; in response to both the second random delay value and the second serial number being present in the second information and the second serial number being a predefined value, the second random delay value being same as the first random delay value; in response to the second random delay value being present in the second information but the second serial number being absent in the second information, the second random delay value being same as the first random delay value; in response to both the second random delay value and the second serial number being present in the second information and the second serial number being a predefined value, the second random delay value being same as the part of the first random delay value; or in response to the second random delay value being present in the second information but the second serial number being absent in the second information, the second random delay value being same as the part of the first random delay value.

In some example embodiments, the first apparatus further includes: means for receiving, from the second apparatus, a serial number grant; generate the first random delay value based on a reception of the serial number grant; and means for transmitting, to the second apparatus, the first information indicating the first serial number and the first random delay value.

In some example embodiments, the first apparatus further includes: means for receiving, from the second apparatus, a further serial number grant; means for generating a third random delay value based on a reception of the further serial number grant; and means for transmitting, to the second apparatus, third information indicating the first serial number and the third random delay value.

In some example embodiments, the first information is transmitted in physical layer operations, administration, and maintenance (PLOAM) message.

In some example embodiments, the first apparatus includes the optical network unit (ONU), and the second apparatus includes the optical line terminal (OLT).

In some example embodiments, an apparatus for the passive optical network (e.g., second apparatus 120) may include means for performing corresponding steps of method 400. These means may be implemented in any suitable manner. For example, the means may be implemented as circuit apparatus or software modules.

In some example embodiments, the second apparatus may include means for receiving, from a first apparatus, first information indicating a first random delay value generated at the first apparatus and a first serial number of the first apparatus; and means for transmitting, to the first apparatus, second information indicating an identity assigned by the second apparatus and one or more of: a second random delay value or a second serial number.

In some example embodiments, the second apparatus further includes: means for assigning an identity to the first apparatus based on the first random delay value and the first serial number.

In some example embodiments, the second random delay value is same as the first random delay value or the second random delay value is extracted from the first random delay value.

In some example embodiments, the second apparatus further includes: means for transmitting, to the first apparatus, a serial number grant; and means for receiving, from the first apparatus, the first information indicating the first serial number and the first random delay value.

In some example embodiments, the second apparatus further includes: means for based on a determination that the first random delay value is same as a random delay value of a further first apparatus, transmitting, to the first apparatus, a further serial number grant; and means for receiving, from the first apparatus, third information indicating the first serial number and a third random delay value generated based on the further serial number grant.

In some example embodiments, the second apparatus further includes means for based on a determination that a part of the first random delay value is same as a part of a random delay value of a further first apparatus, transmitting, to the first apparatus, a further serial number grant; and means for receiving, from the first apparatus, third information indicating the first serial number and a third random delay value generated based on the further serial number grant.

In some example embodiments, the second apparatus further includes means for based on a determination that the first random delay value is same as a random delay value of a further first apparatus and that a part of the first serial number of the first apparatus is same as a part of a serial number of the further first apparatus, transmitting, to the first apparatus, a further serial number grant; and means for receiving, from the first apparatus, third information indicating the first serial number and a third random delay value generated based on the further serial number grant.

In some example embodiments, the second apparatus further includes means for based on a determination that a part of the first random delay value is same as a part of a random delay value of a further first apparatus and a part of the first serial number of the first apparatus is same as a part of a serial number of the further first apparatus, transmitting, to the first apparatus, a further serial number grant; and means for receiving, from the first apparatus, third information indicating the first serial number and a third random delay value generated based on the further serial number grant.

In some example embodiments, the first information is received in physical layer operations, administration, and maintenance (PLOAM) message.

In some example embodiments, the first apparatus includes the optical network unit (ONU), and the second apparatus includes the optical line terminal (OLT).

Several examples of the first apparatus 110 and the second apparatus 120 are described above in conjunction with FIG. 1 to FIG. 4. In some example embodiments, the first apparatus 110 and the second apparatus 120 may be combined as a communication system. Any other suitable components or devices may also be included in the communication system.

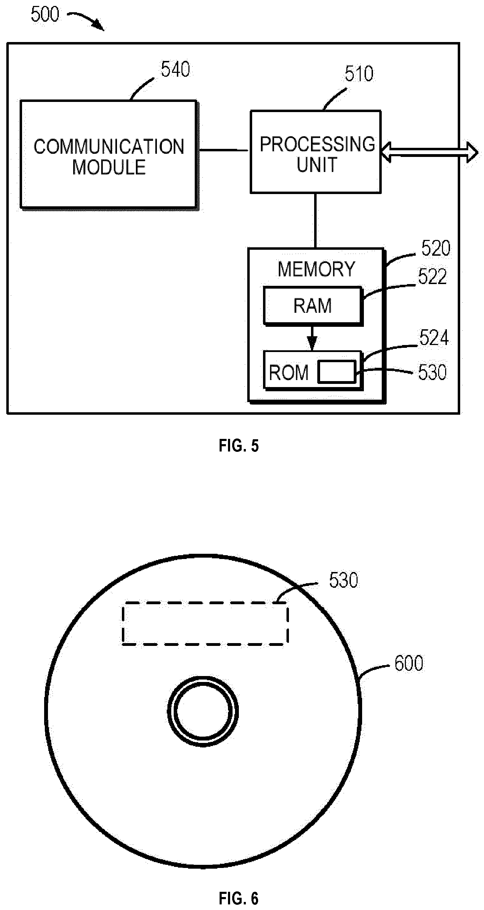

FIG. 5 is a simplified block diagram of a device 500 suitable for implementing example embodiments of the present disclosure. The device 500 may be used to implement the first apparatus 110 and the second apparatus 120 in the communication environment 100. As shown in the figure, the device 500 includes one or more processing units 510, one or more memories 520 coupled to the processing unit 510, and a communication module 540 coupled to the processing unit 510.

The communication module 540 is configured for bidirectional communication. In some example embodiments, the communication module 540 may have at least one antenna to facilitate communication. In some example embodiments, the communication module 540 may have one or more communication interfaces. The communication interface may represent any interface that is necessary for communication with other network elements.

The processing unit 510 may be of any type suitable for a local technology network and may include, but is not limited to, one or more of a general purpose computer, a special purpose computer, a microcontroller, a digital signal controller (DSP), and a controller-based multi-core controller architecture. The device 500 may have multiple processors, such as an application specific integrated circuit chip that is slaved in time to a clock which synchronizes with the main processor.

The memory 520 may include one or more non-volatile memories and one or more volatile memories. Examples of the non-volatile memory include, but are not limited to, a read only memory (ROM) 524, an erasable programmable read only memory (EPROM), a flash memory, a hard disk, a compact disk (CD), a digital video disk (DVD), and other magnetic and/or optical storage. Examples of the volatile memory include, but not limited to, a random-access memory (RAM) 522 and other volatile memory that does not last in the power-down duration.

The computer program 530 includes computer executable instructions that are executed by the associated processing unit 510. The computer program 530 may be stored in the ROM 524. The processing unit 510 may perform any suitable actions and processing by loading the computer program 530 into the RAM 522.

Example embodiments of the present disclosure may be implemented by means of the computer program 530, so that the device 500 may perform any process of the present disclosure as discussed with reference to FIG. 2 to FIG. 4. Example embodiments of the present disclosure may also be implemented by hardware or by a combination of software and hardware.

In some example embodiments, the computer program 530 may be tangibly contained in a computer-readable medium that may be included in the device 500 (such as in the memory 520) or other storage devices that are accessible by the device 500. The computer program 530 may be loaded from the computer-readable medium to the RAM 522 for execution. The computer-readable medium may include any type of tangible non-volatile memory, such as ROM, EPROM, a flash memory, a hard disk, CD, DVD, and the like. FIG. 6 shows an example of the computer-readable medium 600 in the form of CD or DVD according to some example embodiments of the present disclosure. The computer readable medium 1100 has the computer program 530 stored thereon.

In general, various embodiments of the present disclosure may be implemented in hardware or dedicated circuit, software, logic, or any combination thereof. Some aspects may be implemented in hardware, and other aspects may be implemented in firmware or software, which may be executed by a controller, microprocessor, or other computing device. Although various aspects of example embodiments of the present disclosure are shown and described as block diagrams, flowcharts, or using some other pictorial representation, it should be understood that the block, apparatus, systems, technique, or method described herein may be implemented in, as non-limiting examples, hardware, software, firmware, dedicated circuit or logic, general purpose hardware or controller or other computing device, or some combination thereof.

The present disclosure also provides at least one computer program product tangibly stored on a computer readable storage medium. In some example embodiments, the computer readable storage medium may be non-transitory. The computer program product includes computer-executable instructions, such as instructions included in program modules, being executed in a device on a target real or virtual processor, to perform the method 300 described above with reference to FIG. 3 or the method 400 described above with reference to FIG. 4. Generally, program modules include routines, programs, libraries, objects, classes, components, data structures, or the like that perform particular tasks or implement particular abstract data types. In various embodiments, the functionality of the program modules may be combined or split between program modules as desired. Machine-executable instructions for program modules may be executed within a local or distributed device. In a distributed device, program modules may be located in local and remote storage media.

Computer program code for implementing the methods of the present disclosure may be written in one or more programming languages. These computer program codes may be provided to a processor of a general-purpose computer, special purpose computer, or other programmable data processing apparatus, such that the program codes, when executed by the computer or other programmable data processing apparatus, cause the functions/operations specified in the flowcharts and/or block diagrams to be implemented. The program code may be executed entirely on a computer, partially on a computer, as a stand-alone software package, partly on a computer and partly on a remote computer, or entirely on the remote computer or server.

In the context of the present disclosure, the computer program code or related data may be carried by any suitable carrier to enable a device, apparatus or processor to perform various processes and operations described above. Examples of the carrier include a signal, computer-readable medium, and the like. Examples of the signal may include electrical signals, optical signals, radio signals, sound signals, or other forms of propagated signals, such as carrier waves, infrared signals, and the like.

The computer readable medium may be any tangible medium containing or storing a program used to or related to an instruction execution system, apparatus, or device. The computer readable medium may be a computer readable signal medium or a computer readable storage medium. The computer readable medium may include but not limited to an electronic, magnetic, optical, electromagnetic, infrared, or semiconductor system, apparatus, or device, or any suitable combination thereof. More detailed examples of the computer readable storage medium include an electrical connection having one or more wires, a portable computer diskette, a hard disk, a random-access memory (RAM), a read-only memory (ROM), an erasable programmable read-only memory (EPROM or Flash memory), an optical storage device, a magnetic storage device, or any suitable combination thereof.

Furthermore, although the operations of the methods of the present disclosure are described in a particular order in the drawings, this does not require or imply that it is necessary to perform these operations in the particular order, or it is necessary to perform all of the illustrated operations to achieve a desired result. Rather, the steps depicted in the flowchart may change the order of execution. Additionally or alternatively, certain steps may be omitted, and multiple steps may be combined into one step for execution, and/or one step may be decomposed into multiple step for execution. It should also be noted that features and functions of two or more apparatuses according to the present disclosure may be embodied in one apparatus. Conversely, the features and functions of one apparatus described above may be embodied by further divided multiple apparatuses.

Although the present disclosure has been described with reference to several specific embodiments, it should be understood that the present disclosure is not limited to the specific embodiments disclosed. The present disclosure is intended to cover various modifications and equivalent arrangements included within the spirit and scope of the appended claims.

## Claims

1. A first apparatus (110) for a passive optical network, comprising:
at least one processor; and
at least one memory storing instructions that, when executed by the at least one processor, cause the first apparatus (110) at least to:
transmit (310), to a second apparatus (120), first information indicating a first random delay value generated at the first apparatus and a first serial number of the first apparatus (110); and
receive (320), from the second apparatus (120), second information indicating an identity assigned by the second apparatus and one or more of: a second random delay value or a second serial number.

2. The first apparatus (110) of claim 1, wherein the instructions, when executed by the at least one processor, further cause the first apparatus (110) to:
determine whether a condition is satisfied based on the first random delay value, the first serial number, the second random delay value, and the second serial number;
determine that the identity is assigned to the first apparatus based on a determination that the condition is satisfied; or
determine that the identity is not assigned to the first apparatus based on a determination that the condition is not satisfied, wherein for example the condition comprises one of:
in response to both the second random delay value and the second serial number being present in the second information, the second serial number being same as a part of the first serial number, and the second random delay value being same as the first random delay value;
in response to both the second random delay value and the second serial number being present in the second information, the second serial number being same as a part of the first serial number, and the second random delay value being same as a part of the first random delay value;
in response to both the second random delay value and the second serial number being present in the second information and the second serial number being a predefined value, the second random delay value being same as the first random delay value;
in response to the second random delay value being present in the second information but the second serial number being absent in the second information, the second random delay value being same as the first random delay value;
in response to both the second random delay value and the second serial number being present in the second information and the second serial number being a predefined value, the second random delay value being same as the part of the first random delay value; or
in response to the second random delay value being present in the second information but the second serial number being absent in the second information, the second random delay value being same as the part of the first random delay value.

3. The first apparatus (110) of claim 1, wherein A) the instructions, when executed by the at least one processor, further cause the first apparatus (110) to:
receive, from the second apparatus, a serial number grant;
generate the first random delay value based on a reception of the serial number grant; and
transmit, to the second apparatus, the first information indicating the first serial number and the first random delay value,
and/or wherein B) the instructions, when executed by the at least one processor, further cause the first apparatus (110) to:
receive, from the second apparatus, a further serial number grant;
generate a third random delay value based on a reception of the further serial number grant; and
transmit, to the second apparatus, third information indicating the first serial number and the third random delay value,
and/or wherein C) the first information is transmitted in physical layer operations, administration and maintenance, PLOAM, message,
and/or wherein D) the first apparatus (110) comprises an optical network unit, ONU, and the second apparatus comprises an optical line terminal, OLT.

4. A second apparatus (120) for a passive optical network, comprising:
at least one processor; and
at least one memory storing instructions that, when executed by the at least one processor, cause the second apparatus at least to:
receive (410), from a first apparatus (110), first information indicating a first random delay value generated at the first apparatus and a first serial number of the first apparatus; and
transmit (420), to the first apparatus (110), second information indicating an identity assigned by the second apparatus and one or more of: a second random delay value or a second serial number.

5. The second apparatus (120) of claim 4, wherein the instructions, when executed by the at least one processor, further cause the second apparatus to:
assign an identity to the first apparatus based on the first random delay value and the first serial number.

6. The second apparatus (120) of claim 4, wherein the second random delay value is same as the first random delay value or the second random delay value is extracted from the first random delay value.

7. The second apparatus (120) of claim 4, wherein the instructions, when executed by the at least one processor, further cause the second apparatus to:
transmit, to the first apparatus, a serial number grant; and
receive, from the first apparatus, the first information indicating the first serial number and the first random delay value.

8. The second apparatus (120) of claim 4, wherein the instructions, when executed by the at least one processor, further cause the second apparatus to:
based on a determination that the first random delay value is same as a random delay value of a further first apparatus, transmit, to the first apparatus, a further serial number grant ; and
receive, from the first apparatus, third information indicating the first serial number and a third random delay value generated based on the further serial number grant.

9. The second apparatus (120) of claim 4, wherein the instructions, when executed by the at least one processor, further cause the second apparatus to:
based on a determination that a part of the first random delay value is same as a part of a random delay value of a further first apparatus, transmit, to the first apparatus, a further serial number grant; and
receive, from the first apparatus, third information indicating the first serial number and a third random delay value generated based on the further serial number grant.

10. The second apparatus (120) of claim 4, wherein A) the instructions, when executed by the at least one processor, further cause the second apparatus to:
based on a determination that the first random delay value is same as a random delay value of a further first apparatus and that a part of the first serial number of the first apparatus is same as a part of a serial number of the further first apparatus, transmit, to the first apparatus, a further serial number grant ; and
receive, from the first apparatus, third information indicating the first serial number and a third random delay value generated based on the further serial number grant,
and/or wherein B) the instructions, when executed by the at least one processor, further cause the second apparatus to:
based on a determination that a part of the first random delay value is same as a part of a random delay value of a further first apparatus and a part of the first serial number of the first apparatus is same as a part of a serial number of the further first apparatus, transmit, to the first apparatus, a further serial number grant ; and
receive, from the first apparatus, third information indicating the first serial number and a third random delay value generated based on the further serial number grant.

11. The second apparatus (120) of claim 4, wherein A) the first information is received in physical layer operations, administration and maintenance, PLOAM, message,
and/or wherein B) the first apparatus comprises an optical network unit, ONU, and the second apparatus comprises an optical line terminal, OLT.

12. A communication method, comprising:
Transmitting (310), by a first apparatus (110) and to a second apparatus (120), first information indicating a first random delay value generated at the first apparatus and a first serial number of the first apparatus; and
Receiving (320), by the first apparatus (110) and from the second apparatus (120), second information indicating an identity assigned by the second apparatus and one or more of: a second random delay value or a second serial number.

13. A communication method, comprising:
Receiving (410), by a second apparatus (120) and from a first apparatus (110), first information indicating a first random delay value generated at the first apparatus and a first serial number of the first apparatus; and
Transmitting (420), by the second apparatus (120) and to the first apparatus (110), second information indicating an identity assigned by the second apparatus and one or more of: a second random delay value or a second serial number.

14. An apparatus for communication, comprising:
means for transmitting, to a second apparatus (120), first information indicating a first random delay value generated at the first apparatus and a first serial number of the first apparatus; and
means for receiving, from the second apparatus (120), second information indicating an identity assigned by the second apparatus and one or more of: a second random delay value or a second serial number.

15. An apparatus for communication, comprising:
means for receiving, from a first apparatus (110), first information indicating a first random delay value generated at the first apparatus and a first serial number of the first apparatus; and
means for transmitting, to the first apparatus (110), second information indicating an identity assigned by the second apparatus and one or more of: a second random delay value or a second serial number.

16. A computer-readable storage medium having a computer program stored thereon, the computer program comprising instructions that, when executed by a processor on a device, cause the device to perform the method of claim 12 or claim 13.
